# EUROPEAN PATENT APPLICATION

(11) **EP 4 715 964 A1**
(43) Date of publication of application: **25.03.2026**
(21) Application number: 24813738.2
(22) Date of filing: 05.02.2024
(51) Int. Cl.: H01M 10/633

(54) **VEHICLE AND TRACTION BATTERY TEMPERATURE MANAGEMENT METHOD AND SYSTEM THEREFOR**

(30) Priority: 02.06.2023 CN 202310653683
(71) Applicant: Yutong Bus Co., Ltd., Zhengzhou, Henan 450061 (CN)
(72) Inventor: YANG, Lichen, Zhengzhou, Henan 450061 (CN); YU, Lanxu, Zhengzhou, Henan 450061 (CN); XIE, Yanwei, Zhengzhou, Henan 450061 (CN); WANG, Xixi, Zhengzhou, Henan 450061 (CN)
(74) Representative: Gulde & Partner
(86) International application number: PCT/CN2024/075881
(87) International publication number: WO 2024/244532

(57) **Abstract**

The present invention relates to the technical field of traction battery temperature management for vehicles, and specifically relates to a vehicle and a traction battery temperature management method and system therefor. The method includes: controlling, when a cooling condition is reached and in cases where an environment temperature is not greater than a preset environment temperature and a temperature of a cooling liquid of an electrically-driven system is not greater than a preset cooling liquid temperature, an electrically-driven radiator of a cooling apparatus of the electrically-driven system to cool a cooling liquid in a cooling pipeline of a traction battery; and controlling, when a heating condition in a vehicle running process is reached and in a case where a temperature of a battery falls within a first set temperature range, the cooling liquid in a cooling pipeline of the cooling apparatus of the electrically-driven system to heat the cooling liquid in the cooling pipeline of the traction battery. That is, the traction battery is cooled by using an electrically-driven cooling module according to the environment temperature such that energy consumption of cooling the traction battery in a low-temperature environment can be reduced; and the traction battery is heated by using the electrically-driven system according to a state of the vehicle such that energy consumption of heating the traction battery can be reduced.

## Description

### TECHNICAL FIELD

The present invention relates to the technical field of traction battery temperature management for vehicles, and specifically relates to a vehicle and a traction battery temperature management method and system therefor.

### BACKGROUND

Energy saving and emission reduction are development trends of the automobile industry in the world nowadays. Under this background, new energy vehicles are increasingly broadly applied, which is considered by plenty of experts and scholars as an inevitable path for development of automobiles. A traction battery is a core part of the new energy vehicle, so performance and service life of the traction battery draw extensive attention to consumers. A temperature of a cell is one of essential factors affecting the performance and service life of the traction battery. Hence, temperature management becomes one of main research directions of the industry.

Existing technologies in the current industry for cooling management for the traction battery include:
1. Cooling by using cooling liquid: An automobile cooling liquid is used as a main medium for exchanging heat with the traction battery, and circulates to carry away heat generated by the cell of the traction battery. A high-temperature cooling liquid exchanges, in a plate heat exchanger, heat with a low-temperature refrigerant of an air conditioner system such that a relatively low temperature of the cooling liquid can be maintained. Thus, a temperature difference between the cooling liquid and the cell of the traction battery can be increased, and an effect of cooling the traction battery can be improved. Cooling a traction battery by using a cooling liquid is a current common technical route of original equipment manufacturers of automobiles. However, through this technology, when the traction battery is required to be cooled, an air conditioner is required to be turned on to cool the cooling liquid. A compressor of the air conditioner has high operating power (at a level of kilowatts). Consequently, through this technology, the system has relatively high energy consumption when the battery is cooled, and endurance mileage of the vehicle is affected.
2. Cooling by using refrigerant: A refrigerant of an air conditioner is used as a main medium for exchanging heat with the traction battery, and is directly connected to a cooling plate for the traction battery by using a refrigerant pipeline. Compared with cooling by using a cooling liquid, cooling by using a refrigerant has effects as follows: no cooling liquid is required as an intermediate heat transfer medium, and cooling efficiency is greater. Moreover, parts such as a water pump and an expansion water tank required for circulation of the cooling liquid can be omitted, so system cost and weight are lower. However, with a relatively small specific heat capacity, the refrigerant relatively rapidly heats when flowing in the traction battery. Thus, a temperature difference between portions, at a refrigerant entrance and a refrigerant exit in the traction battery, of the cell of the battery is relatively greater, and temperature consistency of the cell of the battery is poor. Particularly, if a vehicle entirely provided with a plurality of packs of traction batteries is cooled by using the refrigerant, temperature uniformity among different battery packs is more obviously poor. Thus, cooling by using a refrigerant is not suitable for a vehicle having a large power distribution capacity.

Existing technologies in the current industry for heating management for the traction battery include:
1. Heating by using heating film: An electric heating film is designed at a bottom of the cell of the battery. When the battery is required to be heated, the cell of the battery is heated by using a principle that an internal resistor generates heat after the heating film is powered on. The battery can be heated at a high rate through this technology. During heating, a temperature difference among different positions of the cell in the battery is small, and temperature uniformity is excellent. However, defects are as follows: when the heating film fails (for example, is short-circuited), a high-temperature electric arc will be generated to break down the battery, so a safety accident such as a fire or an explosion of the battery will be caused. Thus, a safety risk is relatively high.
2. Heating by using cooling liquid: A positive temperature coefficient (PTC) liquid heater is added into a traction battery cooling liquid circulation system. When the battery is required to be heated, the positive temperature coefficient liquid heater is turned on to heat the cooling liquid. The cooling liquid circulates to transfer heat to the cell of the traction battery. Through this technology, security of heating the battery is high, and the cooling liquid circulation system can be shared with traction battery cooling. Defects are as follows: the cooling liquid is used as the intermediate heat transfer medium, so compared with direct heating by using a heating film, the battery is heated at a low rate for a long time. Consequently, energy consumption of heating the battery is high, and endurance mileage of the vehicle is affected.

### SUMMARY

An objective of the present invention is to provide a vehicle and a traction battery temperature management method and system therefor, to resolve a problem of high energy consumption of an existing traction battery temperature management method.

To resolve the above technical problem, the present invention provides a traction battery temperature management method for a vehicle. The method includes a traction battery cooling management method for a vehicle and/or a traction battery heating management method for a vehicle. The traction battery cooling management method for a vehicle includes steps as follows:
1.1) determining, according to a temperature of a traction battery, whether the traction battery reaches a cooling condition; and
1.2) controlling, when the cooling condition is reached and in cases where an environment temperature is not greater than a preset environment temperature and a temperature of a cooling liquid in a cooling pipeline of a cooling apparatus of an electrically-driven system is not greater than a preset cooling liquid temperature, an electrically-driven radiator of the cooling apparatus of the electrically-driven system to cool a cooling liquid in a cooling pipeline of the traction battery.

The traction battery heating management method for a vehicle includes steps as follows:
2.1) determining, according to the temperature of the traction battery, whether the traction battery reaches a heating condition; and
2.2) controlling, when the heating condition in a vehicle running process is reached and in a case where the temperature of the battery falls within a first set temperature range, the cooling liquid in the cooling pipeline of the cooling apparatus of the electrically-driven system to heat the cooling liquid in the cooling pipeline of the traction battery.

Beneficial effects are as follows: an electrically-driven system of a new energy vehicle is cooled by using a cooling liquid. That is, the cooling liquid of the electrically-driven system is cooled by using an electrically-driven radiator of a cooling apparatus of the electrically-driven system. In a vehicle running process, the cooling apparatus of the electrically-driven system is continuously turned on to dissipate heat to cool the electrically-driven system. In a case where a temperature of the cooling liquid in a cooling pipeline of the electrically-driven system is not greater than a particular value (that is, a preset cooling liquid temperature), the temperature of the cooling liquid of the electrically-driven system satisfies a cooling requirement of the electrically-driven system. In this case, the electrically-driven radiator of the electrically-driven system is still in a turned-on state. Moreover, the electrically-driven radiator of the electrically-driven system exchanges heat with an environment to implement a cooling process. Thus, in the method in the present invention, in cases where an environment temperature is not greater than a preset environment temperature and a temperature of a cooling liquid in a cooling pipeline of a cooling apparatus of an electrically-driven system is not greater than a preset cooling liquid temperature, a cooling liquid of a traction battery is cooled by an electrically-driven radiator. In this process, the cooling liquid of the traction battery can be cooled without turning on the cooling apparatus of the traction battery again such that the traction battery can be cooled. Thus, by cooling the traction battery by using the electrically-driven radiator continuously turned on, energy consumption of cooling management for the traction battery is reduced. According to the method in the present invention, a situation that in a vehicle running process, the electrically-driven system generates low-grade heat, and the low-grade heat is transferred to the cooling liquid is further considered. Thus, in the vehicle running process, when the traction battery of the vehicle reaches a heating condition, a temperature of the cooling liquid in a cooling pipeline of the traction battery is less than the temperature of the cooling liquid in the cooling apparatus of the electrically-driven system. Accordingly, according to the method in the present invention, when the heating condition in the vehicle running process is reached and in a case where the temperature of the battery falls within a first set temperature range, the cooling liquid in the cooling apparatus of the electrically-driven system exchanges heat with the cooling liquid in the cooling pipeline of the traction battery such that the cooling liquid of the traction battery can be heated, to further heat the traction battery. In this process, the cooling liquid of the traction battery can be heated without using the cooling liquid heating apparatus of the traction battery, to heat the traction battery. Thus, according to the traction battery heating management method for a vehicle in the present invention, a process of heating the cooling liquid by using the cooling liquid heating apparatus of the traction battery is reduced, such that energy consumption of heating the traction battery is reduced. That is, in the present invention, during traction battery cooling management, the traction battery is cooled by using the electrically-driven radiator of the electrically-driven system, such that the traction battery is prevented from being cooled by using the cooling liquid cooling apparatus of the traction battery. Moreover, during traction battery heating management, the traction battery is heated by using the cooling liquid of the electrically-driven system, such that the traction battery is prevented from using the cooling liquid heating apparatus of the traction battery and from being reversely heated. Further, energy consumption in the traction battery temperature management process is reduced.

Further, in step 1.1), in a case where the temperature of the traction battery is not less than a preset first maximum temperature, the traction battery reaches the cooling condition. In step 1.2), when the electrically-driven radiator cools the cooling liquid in the cooling pipeline of the traction battery, in a case where the temperature of the traction battery is not less than a preset second temperature, the electrically-driven radiator is stopped from cooling the cooling liquid in the cooling pipeline of the traction battery, and a cooling liquid cooling apparatus of the traction battery of the vehicle is controlled to cool the cooling liquid in the cooling pipeline of the traction battery. The preset first maximum temperature is less than the preset second temperature.

In the present invention, in a case where the temperature of the traction battery is excessively high (that is, not less than the preset first maximum temperature), the traction battery is required to be cooled (that is, the traction battery reaches a cooling condition). During traction battery cooling management for a vehicle in the present invention, an insufficient heat dissipation capability of the electrically-driven radiator of the electrically-driven system is considered. In this case, when the traction battery is cooled by using the electrically-driven radiator, not only is the temperature of the traction battery not reduced to a required temperature of the traction battery, but also it is increased. Thus, to prevent the traction battery from being efficiently cooled in this case, when the traction battery is cooled by using the electrically-driven radiator, in a case where the temperature of the traction battery is not less than a preset second temperature (since a preset first maximum temperature is less than a preset second temperature, in this case, the traction battery is cooled by using the electrically-driven radiator, but the temperature of the traction battery is increased), the electrically-driven radiator is stopped from cooling the traction battery. The traction battery is cooled by using the cooling liquid cooling apparatus of the traction battery such that the traction battery can be efficiently cooled.

Further, in step 1.2), when the cooling condition is reached and in a case where the environment temperature is not greater than the preset environment temperature or the temperature of the cooling liquid in the cooling pipeline of the cooling apparatus of the electrically-driven system is not greater than the preset cooling liquid temperature, a cooling liquid cooling apparatus of the traction battery of the vehicle is controlled to cool the cooling liquid in the cooling pipeline of the traction battery.

According to the method in the present invention, only in cases where the temperature of the cooling liquid of the electrically-driven system can satisfy cooling of the electrically-driven system and the cooling liquid of the traction battery can be cooled by using a low-temperature environment, the cooling liquid of the traction battery can be cooled by using the electrically-driven radiator. Thus, in a case where the temperature of the cooling liquid of the electrically-driven system cannot satisfy the cooling of the electrically-driven system, or the environment temperature is not low enough such that the cooling liquid of the traction battery cannot be cooled by using the low-temperature environment, the cooling liquid of the traction battery cannot be cooled by using the electrically-driven radiator. Thus, in this case, the cooling liquid in the cooling pipeline of the traction battery is cooled by using the cooling liquid cooling apparatus of the traction battery such that the traction battery can be efficiently cooled.

Further, in step 1.2), in a case where the temperature of the traction battery is less than a preset first minimum temperature, the cooling liquid in the cooling pipeline of the traction battery is stopped from being cooled. The preset first minimum temperature is less than the preset first maximum temperature.

In a case where the temperature of the traction battery is less than the preset first minimum temperature, the cooling requirement of the traction battery can be satisfied. Thus, in this case, by stopping cooling the cooling liquid in the cooling pipeline of the traction battery, unnecessary energy consumption is avoided, and energy consumption is reduced.

Further, in step 2.2), the heating condition in the vehicle running process is that the temperature of the traction battery does not exceed a preset third minimum temperature. The first set temperature range is greater than a preset second minimum temperature and does not exceed a preset third maximum temperature.

The preset third maximum temperature in the present invention is greater than the preset second minimum temperature. In the method in the present invention, in the vehicle running process, in a case where the temperature of the traction battery is over low, vehicle running is affected. Thus, in the vehicle running process, in a case where the temperature of the traction battery is less than the preset third minimum temperature, the traction battery is required to be heated. In the present invention, the traction battery having two phases requiring heating in this case is considered. In one phase, heating is urgently required to satisfy an electric feedback current requirement (that is, the temperature of the traction battery does not exceed the second minimum temperature). In the other one, the electric feedback current requirement is satisfied, but a preset battery heating temperature is not reached (that is, the temperature of the traction battery is greater than the preset second minimum temperature and does not exceed the preset third maximum temperature). In cases where the electric feedback current requirement is satisfied but the preset battery heating temperature is not reached, vehicle running is hardly affected. Thus, in this case, the cooling liquid in the cooling apparatus of the electrically-driven system exchanges heat with the cooling liquid in the cooling pipeline of the traction battery such that the cooling liquid of the traction battery is heated, to heat the traction battery. In this process, the cooling liquid heating apparatus of the traction battery is not required to be used. Thus, a process of heating the cooling liquid by using the cooling liquid heating apparatus of the traction battery is reduced, and energy consumption of heating the traction battery is reduced.

Further, in step 2.2), when the heating condition in the vehicle running process is reached and in a case where the temperature of the battery falls beyond the first set temperature range, a cooling liquid heating apparatus of the traction battery of the vehicle is controlled to heat the cooling liquid in the cooling pipeline of the traction battery.

In the method in the present invention, when the heating condition in the vehicle running process is reached and in a case where the temperature of the battery falls beyond the first set temperature range, that is, in a case where heating is urgently required to satisfy an electric feedback current requirement (that is, the temperature of the traction battery does not exceed a second minimum temperature), the traction battery is efficiently heated by using the cooling liquid heating apparatus of the traction battery.

Further, in step 2.2), when the cooling liquid heating apparatus heats the cooling liquid in the cooling pipeline of the traction battery, and the temperature of the traction battery is increased to exceed a preset second maximum temperature, the cooling liquid heating apparatus is stopped from heating the cooling liquid in the cooling pipeline of the traction battery, and the cooling liquid in the cooling pipeline of the cooling apparatus of the electrically-driven system is controlled to heat the cooling liquid in the cooling pipeline of the traction battery.

In the present invention, when the heating condition in the vehicle forming process is reached, even if in this case, heating is urgently required to satisfy an electric feedback current requirement (that is, the temperature of the traction battery does not exceed a second minimum temperature), the traction battery reaches, by using the cooling liquid heating apparatus of the traction battery, the electric feedback current requirement but does not reach a preset battery heating temperature (that is, the temperature of the traction battery is greater than a preset second minimum temperature and does not exceed a preset third maximum temperature). Thus, in consideration of this case, to reduce energy consumption in the traction battery heating process, in a case where the temperature of the power battery is increased to exceed the preset second maximum temperature by the cooling liquid heating apparatus of the power battery (where the preset third maximum temperature > the preset second maximum temperature > the preset second minimum temperature, and thus, this case falls within a case where the temperature of the traction battery is greater than the preset second minimum temperature and does not exceed the preset third maximum temperature), the cooling liquid heating apparatus is stopped from heating the traction battery, and the traction battery is heated by using the cooling liquid of the electrically-driven system. Further, energy consumption of heating the traction battery is reduced.

Further, in step 2.2), in a case where the temperature of the traction battery is greater than the preset third maximum temperature, the cooling liquid in the cooling pipeline of the traction battery is stopped from being heated.

In a case where the temperature of the traction battery is less than the preset third maximum temperature, the heating requirement of the traction battery can be satisfied. Thus, in this case, by stopping heating the cooling liquid in the cooling pipeline of the traction battery, unnecessary energy consumption is avoided, and energy consumption is reduced.

To resolve the above technical problem, the present invention further provides a traction battery temperature management system for a vehicle. The system includes a memory and a processor. The processor is configured to execute instructions to implement steps of the traction battery temperature management method introduced above, and achieve the same beneficial effects as the method.

To resolve the above technical problem, the present invention further provides a vehicle. The vehicle includes a traction battery, a cooling apparatus of the traction battery, an electrically-driven system, and a control apparatus. The cooling apparatus of the traction battery is a cooling liquid cooling apparatus. The electrically-driven system includes a cooling apparatus of the electrically-driven system. The vehicle further includes a multi-channel valve for connecting the cooling apparatus of the electrically-driven system to the cooling apparatus of the traction battery. By opening or closing ports of the multi-channel valve, an electrically-driven radiator of the cooling apparatus of the electrically-driven system cools a cooling liquid in a cooling pipeline of the traction battery and/or a cooling liquid in a cooling pipeline of the cooling apparatus of the electrically-driven system heats the cooling liquid in the cooling pipeline of the traction battery. The control apparatus includes a memory and a processor. The processor is configured to execute instructions to implement steps of the traction battery temperature management method introduced above, and achieve the same beneficial effects as the method.

### BRIEF DESCRIPTION OF THE DRAWINGS

FIG. 1 is a flowchart of traction battery cooling management according to the present invention;
FIG. 2 is a flowchart of traction battery heating management according to the present invention;
FIG. 3 is a schematic diagram of implementing traction battery temperature management based on a six-way valve according to the present invention;
FIG. 4 is a flowchart of a traction battery cooling strategy in a low-temperature environment according to the embodiment;
FIG. 5 is a flowchart of a traction battery cooling strategy in a high-temperature environment according to the embodiment;
FIG. 6 is a flowchart of a traction battery heating strategy in a charging state according to the embodiment; and
FIG. 7 is a flowchart of a traction battery heating strategy in a vehicle running state according to the embodiment.

In the figures: 1. six-way valve; 2. electrically-driven radiator; 3. expansion water tank; 4. water pump; 5. driving electric motor; 6. motor control unit; 7. water pump; 8. positive temperature coefficient liquid heater; 9. plate heat exchanger; 10. traction battery pack; 11. compressor; 12. condenser module; 13. gas-liquid separator; 14. first electronic expansion valve; 15. evaporator module; and 16. second electronic expansion valve.

### DETAILED DESCRIPTION

To make the objectives, technical solutions, and advantages of the present invention clearer and more understandable, the present invention is further described in detail below in combination with accompanying drawings and embodiments.

A vehicle embodiment is as follows:
The vehicle in the embodiment is a new energy vehicle. The electrically-driven system of the new energy vehicle is cooled by using a cooling liquid. The cooling liquid exchanges heat with an environment by using a low-temperature radiator. When the vehicle runs, the electrically-driven system generates low-grade heat. The low-grade heat is transferred to the cooling liquid, and then transferred to surroundings by using the low-temperature radiator. Thus, a process of cooling the electrically-driven system is completed. Thus, in the embodiment, a battery cooling circuit is organically coupled to an electrically-driven cooling circuit. By properly setting a control logic, the electrically-driven radiator is reused in a low-temperature environment. The traction battery is cooled, the low-grade heat generated when the electrically-driven system runs is used, and the traction battery is heated. Thus, system energy consumption during battery temperature management for a vehicle can be reduced, and endurance mileage of the vehicle can be increased.

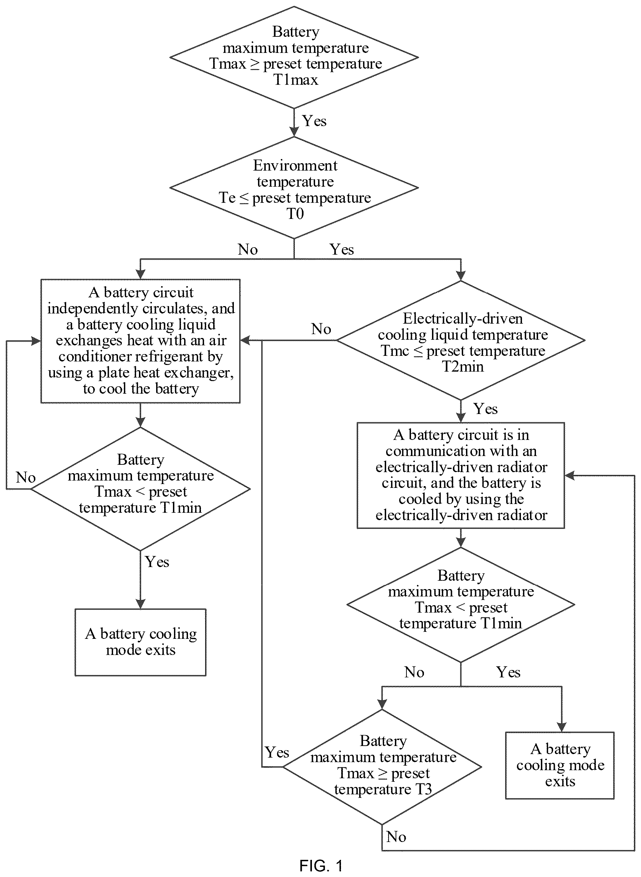

As shown in FIG. 1, the traction battery cooling management includes steps as follows:
Step 1: A vehicle thermal control unit (TCU) measures a traction battery maximum temperature Tmax, an environment temperature Te, and an electrically-driven system cooling liquid temperature Tmc.
Step 2: In cases where the battery maximum temperature Tmax ≥ a preset temperature T1max (that is, the battery temperature is not less than a preset first maximum temperature), an environment temperature Te ≤ a preset environment temperature T0 (T0 is a preset environment temperature, that is, the environment temperature is not greater than the preset environment temperature), and an electrically-driven system cooling liquid temperature Tmc ≤ a preset temperature T2 (T2 is a preset cooling liquid temperature, that is, a temperature of a cooling liquid in a cooling pipeline of a cooling apparatus of the electrically-driven system is not greater than a preset cooling liquid temperature), the battery cooling liquid circuit is in communication with the electrically-driven radiator circuit by using a multi-way valve, the cooling liquid of the traction battery is cooled by using the electrically-driven radiator until the traction battery maximum temperature Tmax < a preset temperature T1min (T1min is a preset first minimum temperature), and cooling of the battery ends; and in cases where a cooling capability of the electrically-driven radiator is insufficient and the battery maximum temperature Tmax ≥ a preset temperature T3 (T3 is a preset second temperature, and T3 > T1 max), this step exits, and step 3 is performed.
Step 3: In cases where the battery maximum temperature Tmax ≥ a preset temperature T1max, and an environment temperature Te > a preset environment temperature T0, or the electrically-driven system cooling liquid temperature Tmc > a preset temperature T2, or an exiting condition of step 2 is satisfied, a cooling liquid circuit of the battery is kept independently circulating by using a multi-way valve, an air conditioner is turned on, a low-temperature refrigerant of an air conditioner system exchanges heat with a high-temperature cooling liquid of a battery by using a plate heat exchanger until the traction battery maximum temperature Tmax < a preset temperature T1min, and cooling of the battery ends.

In the embodiment, the traction battery cooling management is a determining process based on the maximum temperature of the traction battery. The maximum temperature of the traction battery is so obtained: each position of the traction battery is measured, a temperature at each position of the traction battery is obtained, a maximum value of the temperatures of the traction battery obtained in the measurement process is the maximum temperature of the traction battery. That is, in the embodiment, the maximum temperature of the traction battery is used as the temperature of the traction battery in the traction battery cooling management. According to this setting, it is ensured that when a temperature at one position of the traction battery is a temperature required to be reduced, the traction battery is cooled. Then, through this cooling process, the temperature at each position of the traction battery can satisfy a temperature requirement. In another implementation, a temperature at a set position of the traction battery may be collected as the temperature of the traction battery for use during the traction battery cooling management, or an average value of collected temperatures at all positions of the traction battery is used as the temperature of the traction battery for use during the traction battery cooling management.

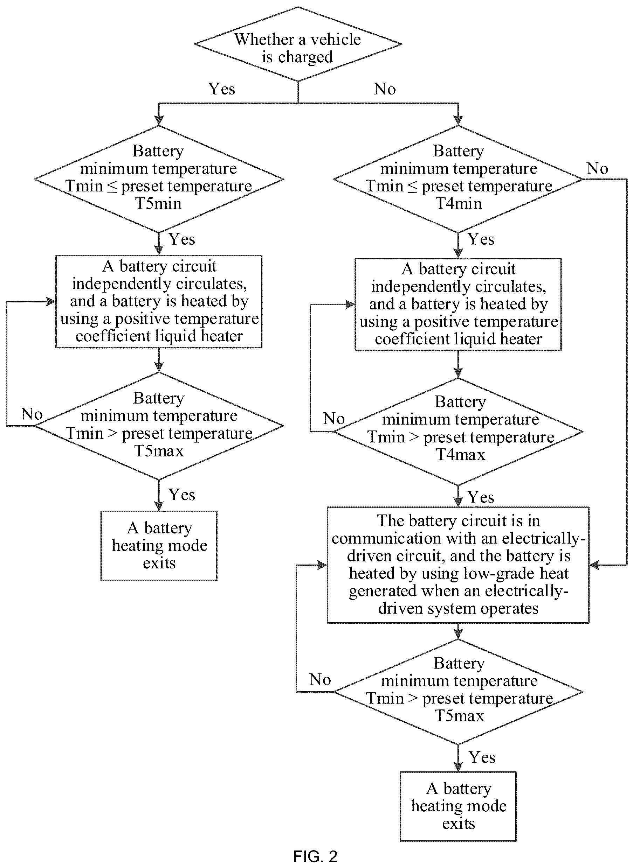

As shown in FIG. 2, the traction battery heating management includes steps as follows:
Step 1: A vehicle thermal control unit (TCU) measures a battery minimum temperature Tmin, a battery cooling liquid temperature Tcc, and a charge state of the vehicle.
Step 2: In cases where the vehicle is in a charging state and a battery minimum temperature Tmin ≤ a preset temperature T5min (T5min is a preset third minimum temperature, that is, the temperature of the traction battery does not exceed the preset third minimum temperature), the battery circuit is kept independently circulating by using a multi-way valve, a positive temperature coefficient (PTC) liquid heater is turned on to rapidly heat a battery cooling liquid until the battery minimum temperature Tmin > a preset temperature T5max (T5 max is a preset third maximum temperature), and heating of the battery ends.
Step 3: In cases where the vehicle is in a non- charging state and the battery minimum temperature Tmin ≤ a preset temperature T4min (T4min is a preset second minimum temperature, that is, when the temperature of the traction battery does not exceed the preset second minimum temperature), the battery circuit is kept independently circulating by using the multi-way valve, the positive temperature coefficient (PTC) liquid heater is turned on to rapidly heat the battery cooling liquid until the battery minimum temperature Tmin > a preset temperature T4max (T4max is a preset second maximum temperature), this mode exits, and step 4 is performed.
Step 4: In cases where the battery minimum temperature Tmin > the preset temperature T4min, or an exiting condition of step 3 is satisfied, and the vehicle is in a non-charging state, after the vehicle is powered up, the battery cooling liquid circuit is connected to the electrically-driven cooling liquid circuit by using the multi-way valve, temperature keeping (that is, heating) is performed on the traction battery by using low-grade heat generated when the electrically-driven system operates until the battery minimum temperature Tmin > the preset temperature T5max (T5 > T4max, that is, T5min > T4max), and heating of the battery ends.

In the embodiment, the traction battery heating management is a determining process based on the minimum temperature of the traction battery. The minimum temperature of the traction battery is so obtained: each position of the traction battery is measured, a temperature at each position of the traction battery is obtained, a minimum value of the temperatures of the traction battery obtained in the measurement process is the minimum temperature of the traction battery. That is, in the embodiment, the minimum temperature of the traction battery is used as the temperature of the traction battery in the traction battery heating management. According to this setting, it is ensured that when a temperature at one position of the traction battery is a temperature required to be increased, the traction battery is heated. Then, through this heating process, the temperature at each position of the traction battery can satisfy a temperature requirement. In another implementation, a temperature at a set position of the traction battery may be collected as the temperature of the traction battery for use during the traction battery heating management, or an average value of collected temperatures at all positions of the traction battery is used as the temperature of the traction battery for use during the traction battery heating management.

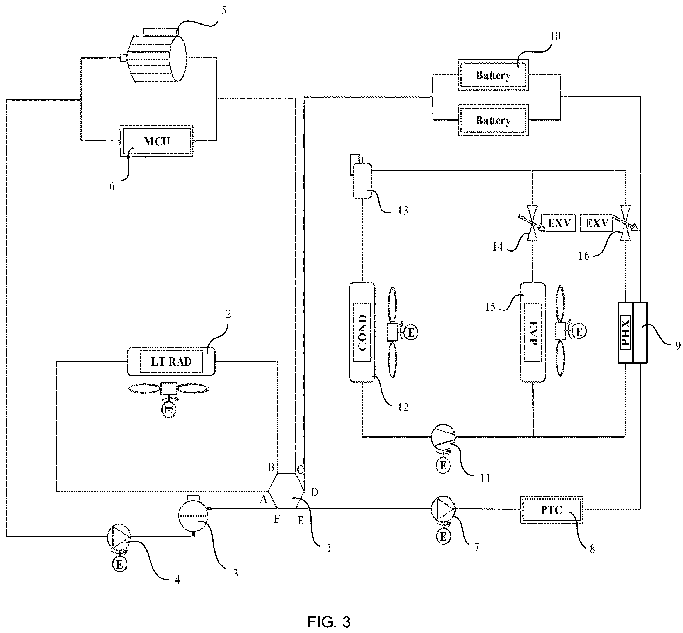

Specifically, as shown in FIG. 3, in the embodiment, a multi-channel valve for connecting the cooling apparatus of the electrically-driven system to the cooling apparatus of the traction battery is used. By opening or closing ports of the multi-channel valve, an electrically-driven radiator of the cooling apparatus of the electrically-driven system cools a cooling liquid in a cooling pipeline of the traction battery and/or a cooling liquid in a cooling pipeline of the cooling apparatus of the electrically-driven system heats the cooling liquid in the cooling pipeline of the traction battery. In FIG. 3, a six-way valve is used as the multi-channel valve. Ports C and F of a six-way valve 1, an expansion water tank 3, a water pump 4, an electric motor 5, and a motor control unit 6 constitute an electrically-driven cooling liquid circulation circuit. Interfaces A and B of the six-way valve 1 and an electrically-driven radiator module 2 constitute an electrically-driven radiator cooling liquid circulation circuit. Ports D and E of the six-way valve 1, a traction battery 10, a plate heat exchanger 9, a positive temperature coefficient liquid heater 8, and a water pump 7 constitute a traction battery cooling liquid circulation circuit. A compressor 11, a condenser module 12, a gas-liquid separator 13, a first electronic expansion valve 14, an evaporator module 15, a second electronic expansion valve 16, and a plate heat exchanger 9 constitute an air conditioner refrigerant circulation circuit.

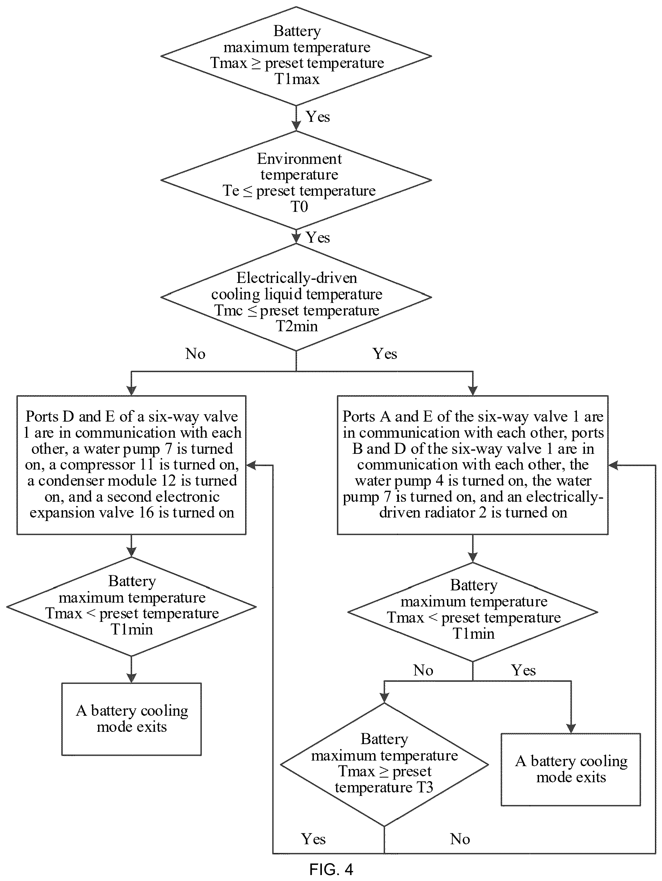

In FIG. 4, a flow of a method for cooling a traction battery in a low-temperature environment according to the embodiment is shown. In a case where the environment temperature is relatively low, the cooling liquid exchanges heat with the environment by using the radiator such that the temperature of the cooling liquid can be relatively low. In this case, if the air conditioner is still turned on, the cooling liquid exchanges, in the plate heat exchanger, heat with the refrigerant, and waste of energy can be generated. In this application scenario, in the present invention, the battery circulation circuit is in communication with the electrically-driven radiator circulation circuit by switching flow channels in the six-way valve. The traction battery is cooled by using the electrically-driven radiator. This mode is mainly applied to cool the battery when the vehicle is charged in a low-temperature environment and cool the battery when vehicle runs in an early period after being charged. This mode includes steps as follows:
1) A thermal control unit (that is, a vehicle thermal control unit) (TCU) measures a battery maximum temperature Tmax, an environment temperature Te, and an electrically-driven cooling circulating cooling liquid temperature Tmc. In cases where the battery maximum temperature Tmax ≥ a preset temperature T1max, an environment temperature Te ≤ a preset environment temperature T0, and an electrically-driven system cooling liquid temperature Tmc > a preset temperature T2, due to a high temperature, the cooling liquid in an electrically-driven cooling circuit cannot directly be in communication with the battery circuit. Moreover, a time for turning on the electrically-driven radiator 2 to reduce the temperature of the cooling liquid in the electrically-driven circuit to a suitable temperature is uncertain. Thus, the traction battery is cooled by relying on an air conditioner system. In this working condition, execution actions of parts in the system are as follows: ports D and E of the six-way valve 1 are separately in communication with each other, the water pump 7 is turned on, the water pump 4 is turned off, the electrically-driven radiator 2 is turned off, the air conditioner compressor 11 is turned on, the condensation module 12 is turned on, the second electronic expansion valve 16 is turned on, and the positive temperature coefficient liquid heater 8 is turned off. A circulation path of a cooling liquid in the system is as follows: the water pump 7-the port E of the six-way valve 1-the port D of the six-way valve 1-the traction battery pack 10-the plate heat exchanger 9-the positive temperature coefficient (PTC) liquid heater 8-the water pump 7. A circulation path of a refrigerant in the air conditioner system is as follows: the compressor 11-the condensation module 12-the gas-liquid separator 13-the second electronic expansion valve 16-the plate heat exchanger 9-the compressor 11. In a case where the a traction battery pack 10 maximum temperature Tmax < a preset temperature T1min, the cooling process ends, the compressor 11 is turned off, the condenser module 12 is turned off, the second electronic expansion valve 16 is turned off, and the water pump 7 is turned off.
2) In cases where the battery maximum temperature Tmax ≥ a preset temperature T1max, an environment temperature Te ≤ a preset environment temperature T0, and an electrically-driven system cooling liquid temperature Tmc ≤ a preset temperature T2, a temperature of a cooling liquid in the electrically-driven circuit is suitable, the electrically-driven circuit may directly be in communication with the battery circuit, the traction battery is cooled no longer by relying on the air conditioner system, and the traction battery is cooled by using the electrically-driven radiator. In this working condition, execution actions of parts in the system are as follows: ports A and E of the six-way valve 1 are in communication with each other, ports B and D of the six-way valve 1 are in communication with each other, the water pump 4 is turned on, the water pump 7 is turned on, the electrically-driven radiator 2 is turned on, the compressor 11 is turned off, the second electronic expansion valve 16 is turned off, and the positive temperature coefficient liquid heater 8 is turned off. A circulation path of the cooling liquid in the system is as follows: the water pump 7-the port E of the six-way valve 1-the port A of the six-way valve 1-the electrically-driven radiator 2-the port B of the six-way valve 1-the port D of the six-way valve 1-the traction battery pack 10-the plate heat exchanger 9-the positive temperature coefficient (PTC) liquid heater 8-the water pump 7.
3) In cases where 2) is satisfied and a cooling capacity of the electrically-driven radiator 2 is sufficient, the temperature of the traction battery continuously decreases. In a case where a traction battery pack 10 maximum temperature Tmax < a preset temperature T1min, the cooling process ends. The six-way valve 1 is switched to an initial state (that is, a state in which the cooling apparatus of the electrically-driven system and the cooling/heating apparatus of the traction battery are independent from each other), the electrically-driven radiator 2 is turned off, the water pump 4 is turned off, and the water pump 7 is turned off.
4) In cases where 2) is satisfied and the cooling capability of the electrically-driven radiator 2 is insufficient, the battery maximum temperature Tmax is kept increasing. It indicates that a cooling requirement of the traction battery cannot be satisfied by relying on the electrically-driven radiator 2. In this case, the traction battery is required to be continuously cooled by relying on the air conditioner system. In this working condition, execution actions of parts in the system are as follows: ports D and E of the six-way valve 1 are separately in communication with each other, the water pump 7 is turned on, the water pump 4 is turned off, the electrically-driven radiator 2 is turned off, the air conditioner compressor 11 is turned on, the condensation module 12 is turned on, the second electronic expansion valve 16 is turned on, and the positive temperature coefficient liquid heater 8 is turned off. A circulation path of a cooling liquid in the system is as follows: the water pump 7-the port E of the six-way valve 1-the port D of the six-way valve 1-the traction battery pack 10-the plate heat exchanger 9-the positive temperature coefficient (PTC) liquid heater 8-the water pump 7. A circulation path of a refrigerant in the air conditioner system is as follows: the compressor 11-the condensation module 12-the gas-liquid separator 13-the second electronic expansion valve 16-the plate heat exchanger 9-the compressor 11. In a case where the a traction battery pack 10 maximum temperature Tmax < a preset temperature T1min, the cooling process ends, the compressor 11 is turned off, the condenser module 12 is turned off, the second electronic expansion valve 16 is turned off, and the water pump 7 is turned off.

An electrically-driven system of a new energy vehicle is cooled by using a cooling liquid. That is, the cooling liquid of the electrically-driven system is cooled by using an electrically-driven radiator of a cooling apparatus of the electrically-driven system. In a vehicle running process, the cooling apparatus of the electrically-driven system is continuously turned on to dissipate heat to cool the electrically-driven system. In a case where a temperature of the cooling liquid in a cooling pipeline of the electrically-driven system is not greater than a particular value (that is, a preset cooling liquid temperature), the temperature of the cooling liquid of the electrically-driven system satisfies a cooling requirement of the electrically-driven system. In this case, the electrically-driven radiator of the electrically-driven system is still in a turned-on state. Moreover, the electrically-driven radiator of the electrically-driven system exchanges heat with an environment to implement a cooling process. Thus, in the method in the present invention, in cases where an environment temperature is not greater than a preset environment temperature and a temperature of a cooling liquid in a cooling pipeline of a cooling apparatus of an electrically-driven system is not greater than a preset cooling liquid temperature, a cooling liquid of a traction battery is cooled by an electrically-driven radiator. In this process, the cooling liquid of the traction battery can be cooled without turning on the cooling apparatus of the traction battery again such that the traction battery can be cooled. Thus, by cooling the traction battery by using the electrically-driven radiator continuously turned on, energy consumption of cooling management for the traction battery is reduced.

Moreover, in the present invention, in a case where the temperature of the traction battery is excessively high (that is, not less than the preset first maximum temperature), the traction battery is required to be cooled (that is, the traction battery reaches a cooling condition). During traction battery cooling management for a vehicle in the present invention, an insufficient heat dissipation capability of the electrically-driven radiator of the electrically-driven system is considered. In this case, when the traction battery is cooled by the electrically-driven radiator, not only is the temperature of the traction battery not reduced to a required temperature of the traction battery, but also it is increased. Thus, to prevent the traction battery from being efficiently cooled in this case, when the traction battery is cooled by using the electrically-driven radiator, if the temperature of the traction battery is not less than a preset second temperature (since a preset first maximum temperature is less than a preset second temperature, in this case, the traction battery is cooled by using the electrically-driven radiator, but the temperature of the traction battery is increased), the electrically-driven radiator is stopped from cooling the traction battery. The traction battery is cooled by using the cooling liquid cooling apparatus of the traction battery such that the traction battery can be efficiently cooled.

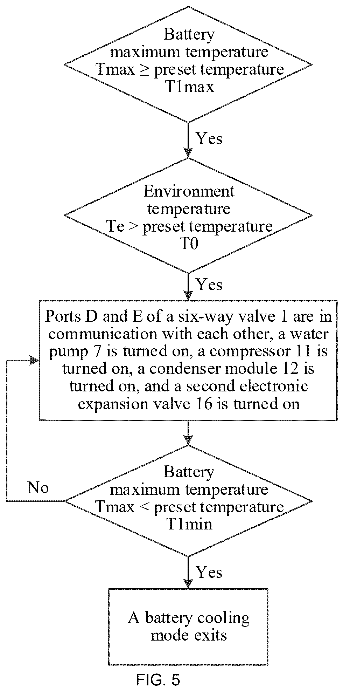

In FIG. 5, a flow of a method for cooling a traction battery in a high-temperature environment according to the embodiment is shown. In a case where the environment temperature is high, the cooling liquid exchanges heat with the environment by using the electrically-driven radiator 2, but a water temperature requirement required for cooling the battery cannot be satisfied. In this application scenario, the battery cooling liquid circuit independently circulates, the air conditioner is turned on, and the battery cooling liquid exchanges, in the plate heat exchanger 9, heat with the low-temperature refrigerant such that a cooling liquid temperature requirement for cooling the battery can be satisfied. Specific implementation solutions are as follows:
1) The thermal control unit (TCU) measures the battery maximum temperature Tmax and an environment temperature Te. In cases where the battery maximum temperature Tmax ≥ the preset temperature T1max, and the environment temperature Te > the preset environment temperature T0, the cooling liquid temperature requirement for cooling the traction battery 10 cannot be satisfied by using the electrically-driven radiator 2, the air conditioner system is required to be turned on, and the low-temperature refrigerant exchanges, in the plate heat exchanger 9, heat with the battery cooling liquid such that the battery can be cooled. In this working condition, execution actions of parts in the system are as follows: ports D and E of the six-way valve 1 are in communication with each other, the water pump 7 is turned on, the compressor 11 is turned on, the condenser module 12 is turned on, the second electronic expansion valve 16 is turned on, and the positive temperature coefficient liquid heater 8 is turned off. A circulation path of a cooling liquid in the system is as follows: the water pump 7-the port E of the six-way valve 1-the port D of the six-way valve 1-the traction battery pack 10-the plate heat exchanger 9-the positive temperature coefficient liquid heater 8-the water pump 7. A circulation path of a refrigerant in the air conditioner system is as follows: the compressor 11-the condenser module 12-the gas-liquid separator 13-the second electronic expansion valve 16-the plate heat exchanger 9-the compressor 11.
2) In a case where the traction battery pack 10 maximum temperature Tmax < the preset temperature T1min, the cooling process ends, the water pump 7 is turned off, the compressor 11 is turned off, the condenser module 12 is turned off, the second electronic expansion valve 16 is turned off, and the battery cooling process ends.

According to the method in the present invention, only in cases where the temperature of the cooling liquid of the electrically-driven system can satisfy cooling of the electrically-driven system and the cooling liquid of the traction battery can be cooled by using a low-temperature environment, the cooling liquid of the traction battery can be cooled by using the electrically-driven radiator. Thus, in a case where the temperature of the cooling liquid of the electrically-driven system cannot satisfy the cooling of the electrically-driven system, or the environment temperature is not low enough such that the cooling liquid of the traction battery cannot be cooled by using the low-temperature environment, the cooling liquid of the traction battery cannot be cooled by using the electrically-driven radiator. Thus, in this case, the cooling liquid in the cooling pipeline of the traction battery is cooled by using the cooling liquid cooling apparatus of the traction battery such that the traction battery can be efficiently cooled.

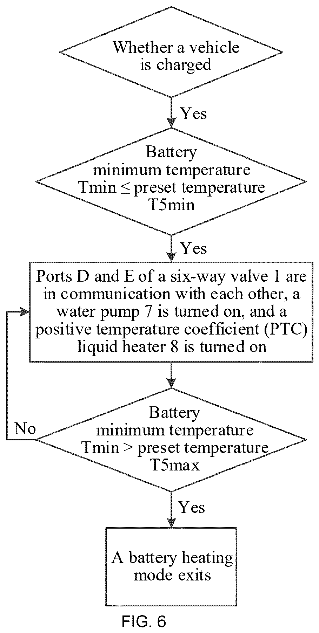

In FIG. 6, a flow of a method for heating a traction battery when a vehicle is in a charging state according to the embodiment is shown. In the charging state of the vehicle, the traction battery is required to be rapidly heated, to prevent a charging current from being limited due to an excessively low temperature of the traction battery. To ensure a heating rate of the traction battery, in this case, the battery circuit independently circulates, the cooling liquid in the battery circuit is rapidly heated to a suitable temperature by using the positive temperature coefficient liquid heater. The high-temperature cooling liquid exchanges heat with the cell of the traction battery such that the temperature of the cell of the battery is increased. Specific implementation solutions are as follows:
1) In a case where the thermal control unit (TCU) receives a charging state of the vehicle, a traction battery minimum temperature Tmin is measured. In a case where the traction battery minimum temperature Tmin ≤ a preset charging temperature T5min, the positive temperature coefficient (PTC) liquid heater 8 is turned on to heat the traction battery. The battery cooling liquid is maintained at a suitable heating temperature by controlling turning-on/off and level of the positive temperature coefficient (PTC) liquid heater 8. In this working condition, execution actions of parts in the system are as follows: ports D and E of the six-way valve 1 are in communication with each other, the water pump 7 is turned on, the positive temperature coefficient (PTC) liquid heater 8 is turned on, and the air conditioner system is turned off. A circulation path of the cooling liquid in the system is as follows: the water pump 7-the port E of the six-way valve 1-the port D of the six-way valve 1-the traction battery pack 10-the plate heat exchanger 9-the positive temperature coefficient liquid heater 8-the water pump 7.
2) In a case where the traction battery minimum temperature Tmin > a preset charging temperature T5max, the temperature of the traction battery can satisfy a requirement of a charging current of the vehicle, the battery heating process ends, the water pump 7 is turned off, and the positive temperature coefficient liquid heater 8 is turned off.

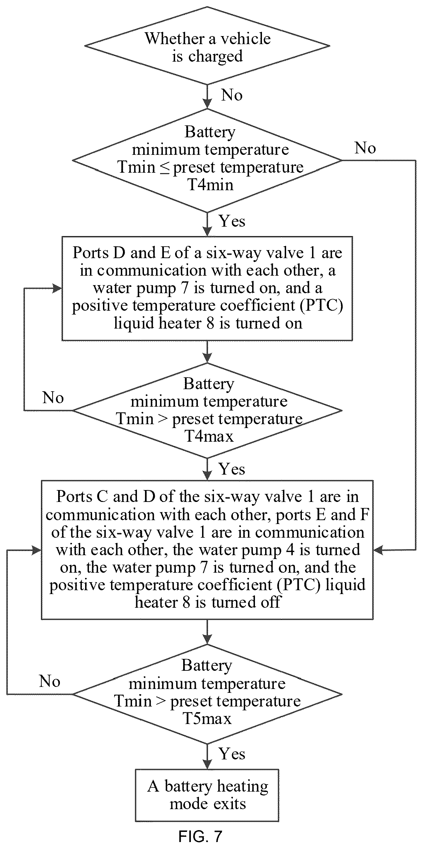

In FIG. 7, a flow of a method for heating a traction battery in a running state of a vehicle according to the embodiment is shown. In the running state of the vehicle, the electrically-driven system operates to generate low-grade heat. The heat may be recycled to heat the traction battery such that power consumption of heating the traction battery can be reduced. However, since the electrically-driven system generates relatively little heat, if by relying on only the heat of the electrically-driven system, a heating rate of the traction battery is slow. In a case where the battery temperature is relatively low, a feedback current when the vehicle is braked is affected. An electric feedback amount of the vehicle is reduced. Endurance mileage of the vehicle is affected. Thus, in the running state, a traction battery heating method in which a positive temperature coefficient liquid heater and electric drive waste heat are combined may be used, to improve a braking electric feedback capability of the vehicle and increase the endurance mileage of the vehicle based on a minimum power consumption of heating the battery. Specific implementation solutions are as follows:
1) In a case where the thermal control unit (TCU) receives a non-charging state of the vehicle, a traction battery minimum temperature Tmin is measured. In a case where the traction battery minimum temperature Tmin ≤ a preset temperature T4min during vehicle running, the battery circuit independently circulates, and the positive temperature coefficient (PTC) liquid heater 8 is turned on to rapidly heat the traction battery, to ensure a basic electric feedback capability of the vehicle. In this working condition, execution actions of parts in the system are as follows: ports D and E of the six-way valve 1 are in communication with each other, the water pump 7 is turned on, the positive temperature coefficient (PTC) liquid heater 8 is turned on, and the air conditioner system is turned off. A circulation path of the cooling liquid in the system is as follows: the water pump 7-the port E of the six-way valve 1-the port D of the six-way valve 1-the traction battery pack 10-the plate heat exchanger 9-the positive temperature coefficient (PTC) liquid heater 8-the water pump 7.
2) In a case where the traction battery minimum temperature Tmin > a preset temperature T4max, a basic electric feedback capability of the vehicle is ensured. To reduce power consumption of heating the battery, in this case, the electrically-driven circuit is in communication with the battery circuit through mode switching by the six-way valve 1. The traction battery continues to be heated by relying on heat generated by operating of the electrically-driven system, to further improve the electric feedback capability of the traction battery and increase the endurance mileage of the vehicle. In this operation condition, execution actions of parts in the system are as follows: ports C and D of the six-way valve 1 are in communication with each other, ports E and F of the six-way valve 1 are in communication with each other, the water pump 4 is turned on, the water pump 7 is turned on, the positive temperature coefficient (PTC) liquid heater 8 is turned off, the electrically-driven radiator 2 is turned off, and the air conditioner system is turned off. A circulation path of the cooling liquid in the system is as follows: the water pump 7-the port E of the six-way valve 1-the port F of the six-way valve 1-the expansion water tank 3-the water pump 4-the driving electric motor 5-the motor control unit 6-the port C of the six-way valve 1-the port D of the six-way valve 1-the traction battery pack 10-the plate heat exchanger 9-the positive temperature coefficient liquid heater 8-the water pump 7.
3) In a case where the traction battery minimum temperature Tmin > a preset temperature T5max, a battery temperature can satisfy a requirement on a maximum braking feedback current of the vehicle. In this case, a battery heating process ends, the six-way valve 1 is switched to an initial state, the water pump 4 is turned off, and the water pump 7 is turned off.

According to the method in the present invention, a situation that in a vehicle running process, the electrically-driven system generates low-grade heat, and the low-grade heat is transferred to the cooling liquid is further considered. Thus, in the vehicle running process, when the traction battery of the vehicle reaches a heating condition, a temperature of the cooling liquid in a cooling pipeline of the traction battery is less than the temperature of the cooling liquid in the cooling apparatus of the electrically-driven system. Accordingly, according to the method in the present invention, when the heating condition in the vehicle running process is reached and in a case where the temperature of the battery falls within a first set temperature range, the cooling liquid in the cooling apparatus of the electrically-driven system exchanges heat with the cooling liquid in the cooling pipeline of the traction battery such that the cooling liquid of the traction battery can be heated, to heat the traction battery. In this process, the cooling liquid of the traction battery can be heated without using the cooling liquid heating apparatus of the traction battery, to heat the traction battery. Thus, according to the traction battery heating management method for a vehicle in the present invention, a process of heating the cooling liquid by using the cooling liquid heating apparatus of the traction battery is reduced, such that energy consumption of heating the traction battery is reduced.

Moreover, in the method in the present invention, in the vehicle running process, if the temperature of the traction battery is over low, vehicle running is affected. Thus, in the vehicle running process, if the temperature of the traction battery is less than the preset third minimum temperature, the traction battery is required to be heated. In the present invention, the traction battery having two phases requiring heating in this case is considered. In one phase, heating is urgently required to satisfy an electric feedback current requirement (that is, the temperature of the traction battery does not exceed the second minimum temperature). In the other one, the electric feedback current requirement is satisfied, but a preset battery heating temperature is not reached (that is, the temperature of the traction battery is greater than the preset second minimum temperature and does not exceed the preset third maximum temperature). In cases where the electric feedback current requirement is satisfied but the preset battery heating temperature is not reached, vehicle running is hardly affected. Thus, in this case, the cooling liquid in the cooling apparatus of the electrically-driven system exchanges heat with the cooling liquid in the cooling pipeline of the traction battery such that the cooling liquid of the traction battery is heated, and the traction battery is heated. In this process, the cooling liquid heating apparatus of the traction battery is not required to be used. Thus, a process of heating the cooling liquid by using the cooling liquid heating apparatus of the traction battery is reduced, and energy consumption of heating the traction battery is reduced. In the present invention, when the heating condition in the vehicle forming process is reached, even if in this case, heating is urgently required to satisfy an electric feedback current requirement (that is, the temperature of the traction battery does not exceed a second minimum temperature), the traction battery reaches, by using the cooling liquid heating apparatus of the traction battery, the electric feedback current requirement but does not reach a preset battery heating temperature (that is, the temperature of the traction battery is greater than a preset second minimum temperature and does not exceed a preset third maximum temperature). Thus, in consideration of this case, to reduce energy consumption in the traction battery heating process, in a case where the temperature of the power battery is increased to exceed the preset second maximum temperature by the cooling liquid heating apparatus of the power battery (where the preset third maximum temperature > the preset second maximum temperature > the preset second minimum temperature, and thus, this case falls within a case where the temperature of the traction battery is greater than the preset second minimum temperature and does not exceed the preset third maximum temperature), the cooling liquid heating apparatus is stopped from heating the traction battery, and the traction battery is heated by using the cooling liquid of the electrically-driven system. Further, energy consumption of heating the traction battery is reduced.

In the embodiment, according to an environment temperature, through a multi-way valve control technology, the traction battery is cooled by comprehensively using an air conditioner and an electrically-driven cooling module. A problem that an existing vehicle-type traction battery has relatively high energy consumption of cooling in a low-temperature environment is resolved. According to a charge state and a running state of a vehicle, through the multi-way valve control technology, the traction battery is heated by comprehensively using waste heat of a positive temperature coefficient liquid heater and an electrically-driven system. On the premise that a battery charging requirement and an electric feedback current requirement are ensured, energy consumption of heating the traction battery is reduced.

An embodiment of a traction battery temperature management method for a vehicle is as follows:
The method in the embodiment includes a traction battery cooling management method for a vehicle and/or a traction battery heating management method for a vehicle. The traction battery cooling management method for a vehicle includes steps as follows:
1.1) According to a temperature of a traction battery, whether the traction battery reaches a cooling condition is determined.
1.2) When the cooling condition is reached and in cases where an environment temperature is not greater than a preset environment temperature and a temperature of a cooling liquid in a cooling pipeline of a cooling apparatus of an electrically-driven system is not greater than a preset cooling liquid temperature, an electrically-driven radiator of the cooling apparatus of the electrically-driven system is controlled to cool a cooling liquid in a cooling pipeline of the traction battery.

The traction battery heating management method for a vehicle includes steps as follows:
2.1) According to the temperature of the traction battery, whether the traction battery reaches a heating condition is determined.
2.2) When the heating condition in a vehicle running process is reached and in a case where the temperature of the battery falls within a first set temperature range, the cooling liquid in the cooling pipeline of the cooling apparatus of the electrically-driven system is controlled to heat the cooling liquid in the cooling pipeline of the traction battery.

Specifically, steps of the traction battery temperature management method for a vehicle are introduced in detail in the embodiment of the vehicle, and are not repeated herein.

An embodiment of a traction battery temperature management system for a vehicle is as follows:
The traction battery temperature management system for a vehicle in the embodiment includes a memory and a processor. The processor is configured to execute instructions to implement steps of the traction battery temperature management method for a vehicle. Specifically, steps of the traction battery temperature management method for a vehicle are described in detail in the embodiment of the vehicle, and are not repeated herein.

The above embodiments are merely preferred embodiments of the present invention, but are not intended to limit the present invention. The patent protection scope of the present invention is subject to the claims. Equivalent structural changes made by using the content of the description and the accompanying drawings of the present invention shall also fall within the protection scope of the present invention.

## Claims

1. A traction battery temperature management method for a vehicle, comprising a traction battery cooling management method for a vehicle and/or a traction battery heating management method for a vehicle, wherein the traction battery cooling management method for a vehicle comprises steps as follows:
1.1) according to a temperature of a traction battery, determining whether the traction battery reaches a cooling condition; and
1.2) when the cooling condition is reached and in cases where an environment temperature is not greater than a preset environment temperature and a temperature of a cooling liquid in a cooling pipeline of a cooling apparatus of an electrically-driven system is not greater than a preset cooling liquid temperature, controlling an electrically-driven radiator of the cooling apparatus of the electrically-driven system to cool a cooling liquid in a cooling pipeline of the traction battery; and
the traction battery heating management method for a vehicle comprises steps as follows:
2.1) according to the temperature of the traction battery, determining whether the traction battery reaches a heating condition; and
2.2) when the heating condition in a vehicle running process is reached and in a case where the temperature of the battery falls within a first set temperature range, controlling the cooling liquid in the cooling pipeline of the cooling apparatus of the electrically-driven system to heat the cooling liquid in the cooling pipeline of the traction battery.

2. **The** traction battery temperature management method for a vehicle according to claim 1, wherein in step 1.1), when the temperature of the traction battery is not less than a preset first maximum temperature, the traction battery reaches the cooling condition; and in step 1.2), when the electrically-driven radiator cools the cooling liquid in the cooling pipeline of the traction battery, in a case where the temperature of the traction battery is not less than a preset second temperature, the electrically-driven radiator is stopped from cooling the cooling liquid in the cooling pipeline of the traction battery, and a cooling liquid cooling apparatus of the traction battery of the vehicle is controlled to cool the cooling liquid in the cooling pipeline of the traction battery; and the preset first maximum temperature is less than the preset second temperature.

3. **The** traction battery temperature management method for a vehicle according to claim 1, wherein in step 1.2), when the cooling condition is reached and in cases where the environment temperature is not greater than the preset environment temperature or the temperature of the cooling liquid in the cooling pipeline of the cooling apparatus of the electrically-driven system is not greater than the preset cooling liquid temperature, a cooling liquid cooling apparatus of the traction battery of the vehicle is controlled to cool the cooling liquid in the cooling pipeline of the traction battery.

4. **The** traction battery temperature management method for a vehicle according to any one of claims 1 to 3, wherein in step 1.2), when the temperature of the traction battery is less than a preset first minimum temperature, the cooling liquid in the cooling pipeline of the traction battery is stopped from being cooled; and the preset first minimum temperature is less than the preset first maximum temperature.

5. **The** traction battery temperature management method for a vehicle according to claim 1, wherein in step 2.2), the heating condition in the vehicle running process is that the temperature of the traction battery does not exceed a preset third minimum temperature; and the first set temperature range is greater than a preset second minimum temperature and does not exceed a preset third maximum temperature.

6. **The** traction battery temperature management method for a vehicle according to claim 5, wherein in step 2.2), when the heating condition in the vehicle running process is reached and in a case where the temperature of the battery falls beyond the first set temperature range, a cooling liquid heating apparatus of the traction battery of the vehicle is controlled to heat the cooling liquid in the cooling pipeline of the traction battery.

7. **The** traction battery temperature management method for a vehicle according to claim 6, wherein in step 2.2), when the cooling liquid heating apparatus heats the cooling liquid in the cooling pipeline of the traction battery, in a case where the temperature of the traction battery is increased to exceed a preset second maximum temperature, the cooling liquid heating apparatus is stopped from heating the cooling liquid in the cooling pipeline of the traction battery, and the cooling liquid in the cooling pipeline of the cooling apparatus of the electrically-driven system is controlled to heat the cooling liquid in the cooling pipeline of the traction battery.

8. **The** traction battery temperature management method for a vehicle according to any one of claims 1, 5, and 7, wherein in step 2.2), when the temperature of the traction battery is greater than the preset third maximum temperature, the cooling liquid in the cooling pipeline of the traction battery is stopped from being heated.

9. A traction battery temperature management system for a vehicle, comprising a memory and a processor, the processor is configured to execute instructions to implement steps of the traction battery temperature management method according to any one of claims 1 to 8.

10. A vehicle, comprising a traction battery, a cooling apparatus of the traction battery, an electrically-driven system, and a control apparatus, the cooling apparatus of the traction battery is a cooling liquid cooling apparatus, and the electrically-driven system comprises a cooling apparatus of the electrically-driven system; wherein the vehicle further comprises a multi-channel valve for connecting the cooling apparatus of the electrically-driven system to the cooling apparatus of the traction battery, and by opening or closing ports of the multi-channel valve, an electrically-driven radiator of the cooling apparatus of the electrically-driven system cools a cooling liquid in a cooling pipeline of the traction battery and/or a cooling liquid in a cooling pipeline of the cooling apparatus of the electrically-driven system heats the cooling liquid in the cooling pipeline of the traction battery; and the control apparatus comprises a memory and a processor, and the processor is configured to execute instructions to implement steps of the traction battery temperature management method according to any one of claims 1 to 8.
